# EUROPÄISCHE PATENTSCHRIFT

(11) **EP 0 452 519 B1**
(45) Veröffentlichungstag und Bekanntmachung des Hinweises auf die Patenterteilung: **13.10.1993**
(21) Anmeldenummer: 90107193.6
(22) Anmeldetag: 14.04.1990
(51) Int. Cl.: B65G 7/02

(54) **Vorrichtung zum Festhalten eines Fahrzeuges an einer Rampe**
Device for retaining a vehicle at a ramp
Dispositif pour retenir une voiture à une rampe

(43) Veröffentlichungstag der Anmeldung: 23.10.1991
(73) Patentinhaber: VAN WIJK NEDERLAND B.V., NL-8243 PJ Lelystad (NL)
(72) Erfinder: Das Dores, Antonio Pereira, NL-8224 HL Lelystad (NL)
(74) Vertreter: Beil, Hans Chr., Dr.

(56) Entgegenhaltungen:
- EP-A- 0 356 073
- WO-A-88/08403
- US-A- 4 818 170

## Beschreibung

Gegenstand der Erfindung ist eine Vorrichtung zum Festhalten eines Fahrzeuges an einer Laderampe, welche nach dem Andocken wirksam wird und so unbeabsichtigtes Wegrollen oder zu frühes Wegfahren des Fahrzeuges während des Verladevorganges verhindert, sowie nach Beendigung des Verladevorganges das Fahrzeug wieder freigibt.

Die meisten Fahrzeuge, die im europäischen Raum zu Transportzwecken be- und entladen werden, weisen einen Unterfahrschutz auf, der in Europa aufgrund entsprechender Richtlinien bestimmten Erfordernissen genügen muß:
a) er darf einen maximalen Abstand, von der Rückseite des Aufbaus gemessen, nicht überschreiten,
b) er darf eine maximale Höhe vom Boden aus gemessen nicht überschreiten,
c) er muß einer bestimmten Zug- bzw. Druckkraft widerstehen.

Diese Erfordernisse sind auch bei der Konstruktion von Haltevorrichtungen zu beachten, welche an dem Unterfahrschutz befestigt werden sollen. Hinzu kommt, daß solche Haltesysteme auch vom eventuellen Vorhandensein von Ladebordwänden der vorgenannten Fahrzeuge beeinflußt werden.

Gerade in dieser Hinsicht haben bisher bekannte Systeme den Nachteil, daß sie für Fahrzeuge mit Ladebordwänden nicht geeignet sind. Denn sie weisen entweder eine so große Bauhöhe auf, daß die für die Unterfahrbarkeit gemachte Aussparung zu klein ist, oder die Systeme sind unter einer Ladebrücke an der Rampenvorderseite befestigt und sind somit ein Hindernis für die Ladebordwände, die in die Aussparung geschoben werden sollen. Solche Ausführungen sind beispielsweise in der EP-A-0 012 386 beschrieben. Hierin wird eine amerikanische Vorrichtung beschrieben, bei der ein in einem vertikal bewegbaren, an der Rampenfront befestigten Schlitten befindlicher drehbarer Haken angebracht ist.
Der Unterfahrschutz drückt beim Andocken auf eine Schräge des genannten Schlittens, womit der Haken auf die richtige Höhe gebracht wird. Betätigung eines Schalters dreht dann den Haken von der Rampe weg nach oben, wodurch dieser sich um den Unterfahrschutz legt und diesen festhält. Solche Systeme sind jedoch für Europa meistens ungeeignet, da durch die hohe Anzahl von Fahrzeugen mit Ladebordwänden die meisten Überladebrücken freitragend ausgeführt sind, also keine Betonrampe für eine Befestigung zur Verfügung steht.

Amerikanische Systeme weisen ferner den Nachteil auf, daß ihr Verstellbereich nur sehr gering ist. In Europa darf der Unterfahrschutz maximal 450 mm vom hinteren Ende des Fahrzeugs entfernt sein, so daß sich die Verstellbarkeit der Haltevorrichtungen ebenfalls in dieser Größenordnung bewegen muß. Bestehende amerikanische Lösungen decken jedoch meist nur die Hälfte dieses Bereichs ab.

Ziel vorliegender Erfindung ist daher die Bereitstellung einer Vorrichtung zum Festhalten eines Fahrzeugs an einer Rampe, die für möglichst viele Fahrzeugtypen und auch für Rampen mit freitragenden Überladebrücken, die Aussparungen zum Einschieben von Fahrzeugladebordwänden aufweisen, geeignet ist. Die Vorrichtung soll ferner leicht montierbar sein, keine besonderen baulichen Maßnahmen erfordern und die "Schnittstelle Rampe" sicher machen.

Diese Aufgabe wird erfindungsgemäß gelöst durch eine Vorrichtung gemäß Anspruch 1.

Besondere Ausgestaltungen der Erfindung werden anhand der nachfolgenden Abbildungen näher erläutert.

Dabei zeigt
Figur 1 eine Vorderansicht und einen Längsschnitt entlang der Linie A-A des Systems vor einer Rampe mit Überladebrücke,
Figur 2 einen Längsschnitt durch das System in Ruhestellung,
Figur 3 einen Längsschnitt durch das System, wenn das Fahrzeug vor der Rampe steht und das Haltesystem in Wirkstellung gebracht wird,
Figur 4 einen Längsschnitt durch das System, wenn es sich in Wirkstellung befindet und
Figur 5 einzelne Merkmale der erfindungsgemäßen Vorrichtung.

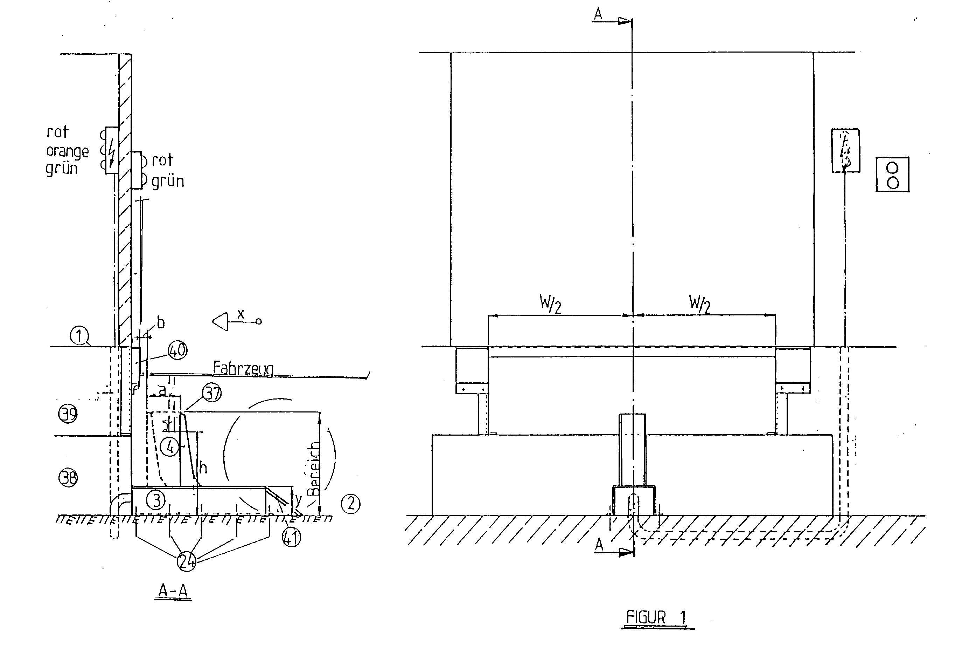

Figur 1 zeigt eine Rampe (1), in der eine Überladebrücke eingebaut sein kann. Bei freitragenden Überladebrücken ist der Raum (38) unter der Überladebrücke (39) offen. In diesen Raum werden die an den Fahrzeugen eventuell angebrachten Ladebordwände geschoben. Vor der Rampe (1) ist auf dem Rampenboden (2) ein Gehäuse (3), welches vorzugsweise rechteckig oder trapezförmig und beispielsweise aus Stahl oder Kunststoff ist, mit Befestigungen (24) im Boden (2) verankert. Der Haken (4) hält einen Unterfahrschutz (37) fest, der sich im horizontalen Verstellereich (a) auf Höhe (h) vom Rampenboden aus vor der Rampe befindet. Der Unterfahrschutz kann dabei nicht weniger als Abstand (b) von der Rampe entfernt sein, da sich der Abstand (b) aus der Dicke der Anprallpuffer (40) und der minimalen Breite des Unterfahrschutzes (37) errechnet und der Länge der rampenseitigen Abdeckplatte (15) der erfindungsgemäßen Vorrichtung entspricht. Das Gehäuse (3) ist niedrig gebaut, da seine Höhe (y) maßgebend dafür ist, ob Ladebordwände noch über das Gehäuse (3) der Haltekonstruktion hinweg in die eventuell vorhandene Ladebordwandöffnung (38) eingeschoben werden können. Die maximale Höhe (y) beträgt vorzugsweise etwa 200 mm. Vor dem Gehäuse (3) kann gewünschtenfalls zum Schutz desselben eine Schräge (41) angebracht sein, die Beschädigungen beim Andocken mit abgesenkten Ladebordwänden verhindert.

Um optimale Sicherheit zu gewährleisten, kann das System zusätzlich mit einer optischen Lichtanlage, wie beispielsweise einer rot-grünen Ampel außerhalb des Laderaums und einer rot-orange-grünen Ampel innerhalb des Laderaums, ausgestattet sein.

Die Steuerung des Hakenantriebes sowie der Ampeln erfolgt von einem Steuerkasten aus. Bedienung erfolgt durch das Betätigen von Schaltern und Tastern. Die Schalter können vorzugsweise Endschalter bzw. Näherungsschalter sein.

Der gesamte Ladevorgang verläuft dann wie folgt:
Haken (4) befindet sich in waagrechter Ruhestellung im Gehäuse (3), die Ampel in der Halle ist rot, so daß nicht geladen werden kann. Die Ampel außen zeigt grün an, das ankommende Fahrzeug kann rückwärts an die Rampe (1) heranfahren. Das Rampenpersonal betätigt den Haken (4) über entsprechende elektrische Mittel,wobei die Ampel außen auf rot schaltet, während die Ampel im Laderaum ebenfalls rot aufleuchtet. Haken (4) dreht nun in vertikale Stellung und wird automatisch in Richtung Rampe gegen den Unterfahrschutz (37) geschoben. Sobald dieser erreicht ist, ist das Fahrzeug verriegelt. Es kann nicht mehr wegrollen oder wegfahren. Die Ampel innen zeigt jetzt grün, der Ladevorgang kann beginnen, die Ampel außen bleibt rot.

Nach Beendigung des Verladevorgangs wird der Haken (4), durch Betätigung entsprechender elektrischer Mittel durch das Rampenpersonal wieder automatisch entriegelt. Gleichzeitig springt innen die Ampel wieder auf rot, außen bleibt sie solange rot, bis sich der Haken (4) wieder in horizontaler Ruhestellung befindet. Dann springt die Ampel außen wieder auf grün, das Fahrzeug kann die Rampe (1) nun wieder verlassen.

Bei Fahrzeugen, welche keinen geeigneten Unterfahrschutz aufweisen, entsteht folgende Situation:
Die Ampel innen ist rot und außen grün. Das Fahrzeug kann an die Rampe (1) heranfahren. Das Rampenpersonal betätigt wieder mittels Knopfdruck den noch im Ruhestand befindlichen Haken (4), die Ampel außen springt auf rot, innen bleibt sie auf rot. Der Haken (4) erreicht die vertikale Stellung und fährt dann in dieser Stellung den gesamten Verstellbereich (a) Richtung Rampe. Hat er seine Endstellung erreicht, schaltet die Ampel in der Halle auf oranges Blinklicht. Das Rampenpersonal weiß, daß nun keine Sicherung des Fahrzeuges vorliegt. Dann wird bewußt manuell ein Bypass betätigt, der den Haken (4) wieder in Ruhestellung fährt. Befindet sich Haken (4) nun in Ruhestellung, schaltet die Ampel innen auf oranges Dauerlicht und die Außenampel bleibt rot. Nun kann ein "ungesicherter Ladevorgang" stattinden.
Ist dieser beendet, wird die Ausgangstellung der Ampeln (innen rot und außen grün) durch Betätigung des elektrischen Mittels durch das Rampenpersonal wieder eingestellt. Das Fahrzeug kann sodann die Rampe wieder verlassen.

Wie hieraus ersichtlich ist, weist der Schaltkasten zur Steuerung vorzugsweise drei grundlegende Bedienungsschalter auf, und zwar "Verriegelung", Entriegelung" und "Bypass für ungesichertes Laden". Alle weiteren Schaltungen und Bewegungen laufen dann automatisch ab.

Es ist natürlich auch möglich, andere Schaltungen in Kombination anzuwenden. So kann beispielsweise die Überladebrücke (39) erst dann eingesetzt werden, wenn Haken (4) das Fahrzeug festhält und dieser erst dann wieder gelöst werden kann, wenn sich die Überladebrücke (39) wieder in Ruhestellung befindet.

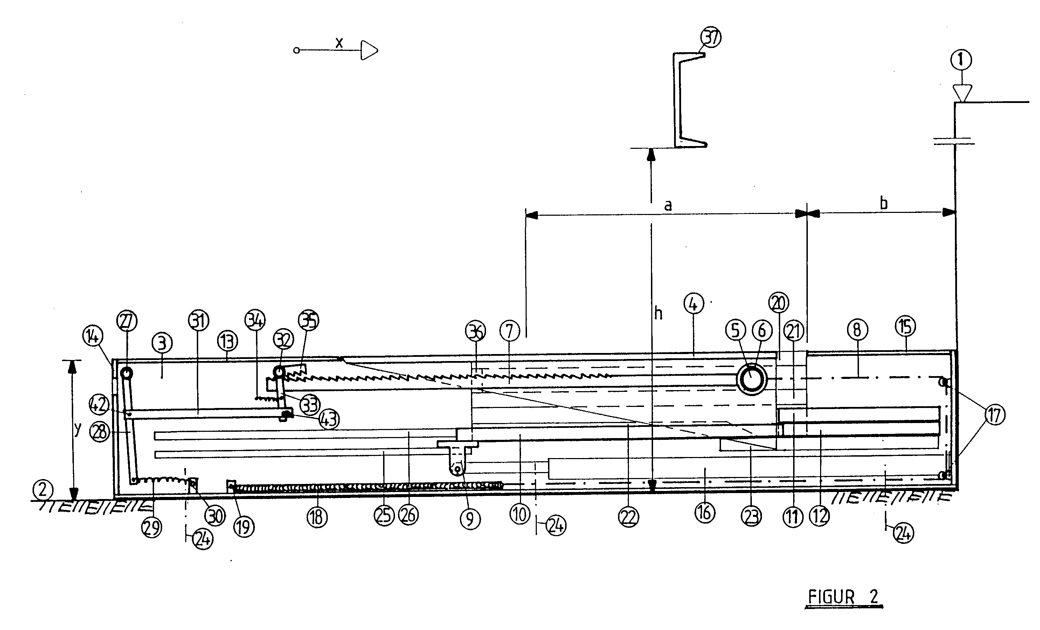

Der Mechanismus der erfindungsgemäßen Haltevorrichtung ist in den Figuren 2-4 und 5 dargestellt und wird nachfolgend erläutert:
Wie in Figur 2 dargestellt, befindet sich der Haken (4) der erfindungsgemäßen Vorrichtung in der Ausgangs- oder Ruhestellung horizontal im Gehäuse (3) und grenzt dabei an die Abdeckplatte (13) der Verriegelung an. Das Fahrzeug fährt rückwärts an Rampe (1) heran. Der Unterfahrschutz (37), oder sonstige Befestigungsmittel, des Fahrzeugs befindet sich auf Höhe (h) im Bereich (a) vor Rampe (1).

Der Haken (4) ist mit der Achse (5) zwischen den oberen Wangen (20) und den mittleren Wangen (21) gelagert. Die Achse (5) lagert weiterhin drehbar in einem Rohr (6), an dem in Richtung Deckplatte (13) eine Zahnstange (7) mit einer Verriegelungsvorrichtung befestigt ist.
In Richtung rampenseitige Deckplatte (15) ist das Rohr (6) mit einem Zugkabel (8) verbunden, das über Umlenkrollen (17) bis zum Gehäuserand und anschließend in Richtung Deckplatte (13) über ein Spannelement (18) verläuft und in Widerlager (19) des Gehäuses (3) befestigt ist.
Das Spannelement (18) ist vorzugsweise eine Feder mit linearer Kraftverteilung.

Die Verriegelungsvorrichtung der Zahnstange (7) besteht aus drei Teilen. Teil 1 besteht aus einem Arm (33) und einem hierzu etwa vertikal angeordneten Riegel (35), die beide fest verbunden sind und um die Achse (32) drehen können. Teil 2 ist eine Schubstange (31), die vertikal einerseits mit dem Arm (33) über Achse (43) verbunden ist, wobei diese Verbindung einen Spielraum aufweist. Vorzugsweise ist dieser Spielraum ein Langloch. Andererseits ist die Schubstange (31) über Achse (42) mit dem federnd gelagerten Kipphebel (28), vorzugsweise über ein Rundloch, verbunden. Kipphebel (28) ist ein Teil des dritten Teils der Verriegelungsvorrichtung. Dieser dritte Teil stellt den Bedienungsarm des gesamten Mechanismus dar und besteht aus dem um die Achse (27) drehbaren Kipphebel (28), der an seinem unteren Ende über ein Federelement (29) mit dem Widerlager (30) des Gehäuses (3) verbunden ist. Teil 1 (Riegel (35)) ist über die Achse (43) mit Teil 2 (Schubstange (31)) und dieser wiederum über Achse (42) mit Teil 3 (Bedienungsarm) verbunden. Das Riegelelement kann vorzugsweise zur Unterstützung des Riegels (35) ein Federelement (34) aufweisen, dessen Federkraft jedoch so klein sein muß, daß es die Wirkung des Hebels (28) mit Federelement (29) nicht beeinflußt.

Die erfindungsgemäße Vorrichtung weist weiterhin eine unter dem Haken (4) befindliche Antriebsvorrichtung (16) für den Haken (4) auf, die mit der entsprechenden Befestigung (9) verbunden ist. Die Befestigung (9) ist ihrerseits über einen Verbindungsarm (10) mit der oberen Stützplatte (11) verbunden und weist weiterhin eine untere und eine obere Führung (25,26) auf. In Ruhestellung befindet sich unter der Stützplatte (11) eine untere Stützplatte (12) auf der Führung (23). Stützplatten (11) und (12) weisen weiterhin untere Wangen (22) auf.

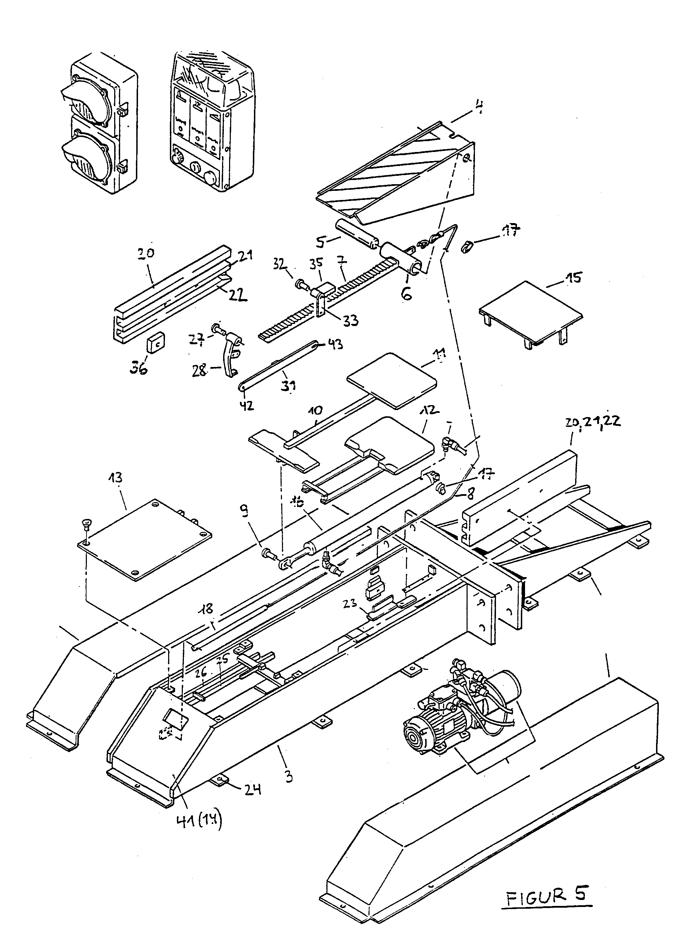

Der Verbindungsarm (10) besitzt ferner einen in Figur 5 dargestellten Mitnehmer für die Stützplatte (12).

In Ruhestellung, wenn sich also der Haken (4) horizontal im Gehäuse (3) befindet, liegen die Stützplatten (11) und (12) übereinander auf der Ruhestandsführung (23). Antrieb (16) befindet sich dann in Nullstellung. Vorzugsweise wird hierbei ein elektro-hydraulisch, elektrisch oder ein pneumatisch betätigter Zylinder gewählt, der bei Ruhestellung des Hakens (4) ganz eingefahren ist. Das Spannelement (18) ist zu diesem Zeitpunkt entspannt. Das Spannelement (29) zieht den Kipphebel (28) in Richtung Widerlager (30), so daß die Schubstange (31) den Arm (33) in Richtung Rampe (1) bewegt und so den Riegel (35) aus dem Bereich der Zahnstange (7) heraushebt, d.h. die Verriegelung ist offen.

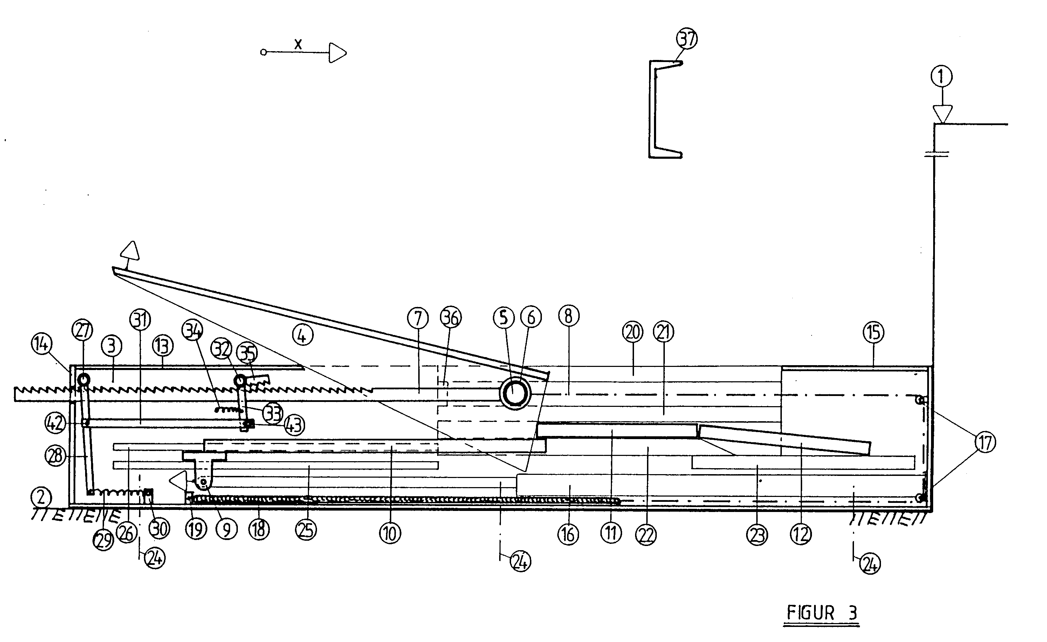

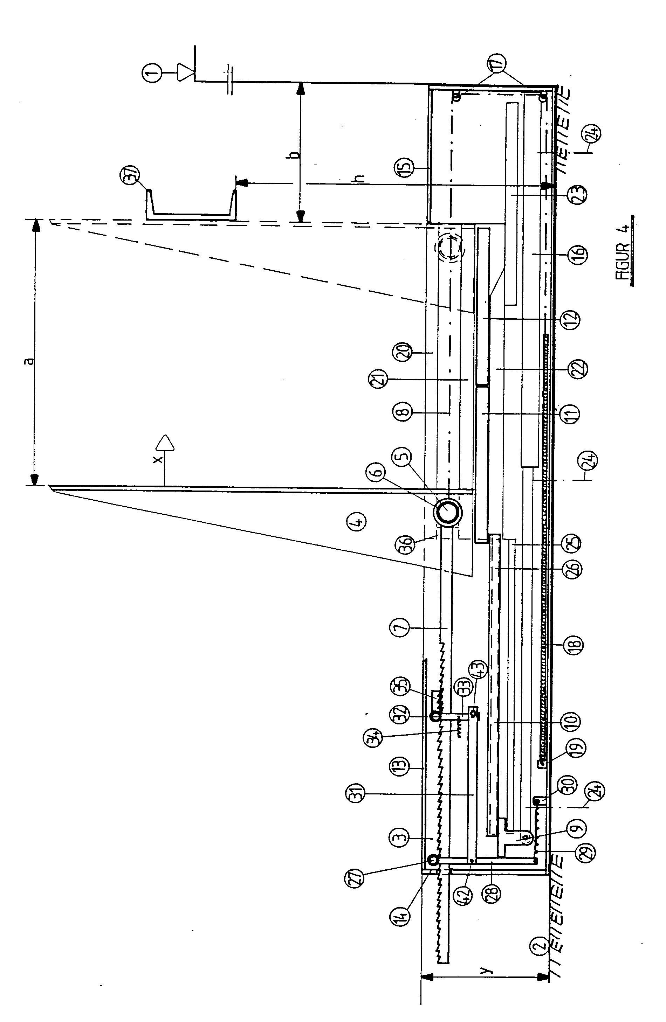

Der Antrieb bzw. Zylinder (16) wird nun zum Ausschieben über bekannte elektrische/elektronische Mittel aktiviert und schiebt die Befestigung (9) auf den Hebel (28) (vgl. Figur 3). Die obere Stützplatte (11) wird über den Verbindungsarm (10) mit von der Rampe (1) gegen die X-Richtung weggezogen. Der Mitnehmer zieht, sobald sich die Stützplatte (11) auf Führung (23) befindet, auch die Stützplatte (12) mit, wobei die obere Stützplatte (11) die Wangen des Hakens (4) berührt. Der über Achse (5) zwischen den obersten Wangen (20) und den mittleren Wangen (21) gelagerte Haken (4) wird langsam aufgerichtet, während der Mitnehmer der Stützplatte (11) die untere Stützplatte (12) über die Schräge der untersten Wangen (22) zieht, bis sie mit der Stützplatte (11) hinter dieser in einer Ebene liegt. Wenn die Achse (5) gegen den Ausschlag (36), der zwischen Wangen (20) und (21) liegt, stößt, dreht die Stützplatte (11) den Haken in vertikale Stellung. Die Abdeckplatte (13) unterstützt dabei die Aufwärtsbewegung des Hakens (4), da die Unterseite des Hakens (4) über die Deckplatte (13) gleitet. Die Stützplatte (11) schiebt somit den Haken (4) nach vorne und dreht ihn gleichzeitig langsam vertikal. Dabei spannt das Zugkabel (8) das Spannelement (18) langsam und zieht es in Richtung Rampe (1). Der Antrieb bzw. Zylinder (16) erreicht seine maximale Stellung. Die Befestigung (9) drückt sodann den Hebel (28) in Richtung Deckplatte (13), das Zugelement (29) spannt sich, Schubstange (31) zieht Arm (33), eventuell unterstützt durch eine Feder (34), ebenfalls in Richtung Deckplatte (13) und der Riegel (35) greift dann in die Zahnstange (7) (vgl. Figur 4).

Da der Haken (4) in vertikaler Position ist, zieht das Spannelement (18) jetzt über das Zugkabel (8) den Haken (4) in (x)-Richtung, und zwar so lange, bis Haken (4) den Unterfahrschutz des Fahrzeugs trifft, max. also über den Bereich (a).
Der Haken (4) ist jetzt in Halteposition.
Versucht das Fahrzeug wegzufahren, drückt der Unterfahrschutz auf Höhe (h) gegen den Haken (4). Da die Stützplatten (11) und (12) den gesamten Führungsbereich zwischen den Positionen (21) und (22) ausfüllen, kann der Haken (4) im gesamten Verstellbereich (a) nicht mehr in die horizontale Stellung zurückgedreht werden. Zusätzlich verhindert der Riegel (35), daß die Zahnstange (7) von der Rampe (1) wegbewegt wird. Das Fahrzeug wird also sicher vor der Rampe (1) gehalten, der Ladebetrieb kann jetzt stattfinden.

Ist der Ladebetrieb beendet, muß der Haken (4) wieder in Ruhestellung gefahren werden.

Um auch dann, wenn das Fahrzeug den Haken (4) von der Rampe (1) wegdrückt, ein störungsfreies Funktionieren zu gewährleisten, weist Schubstange (31) im Punkt (43) einen Spielraum, vorzugsweise ein Langloch, auf. Drückt Zahnstange (7) mit großer Kraft gegen Riegel (35), so neigt Arm (33) dazu, Richtung Rampe (1) zu drehen. Wäre hier eine Verbindung (43) ohne Spielraum vorhanden, würden die Spannungen über Schubstange (31) und Hebel (28) auch auf den Antrieb (16) übertragen. Dabei könnte das gesamte System verklemmen und nicht mehr ohne Kraftaufwand von außen gelöst werden.

Die Entriegelung nach beendetem Lagevorgang wird wie folgt vorgenommen:
Der Antrieb bzw. Zylinder (16) fährt Richtung Rampe (1) wieder ein, die Befestigung (9) gibt den Hebel (28) wieder frei, das Federelement (29) zieht den Hebel (28) und über Schubstange (31) auch den Arm (33) in Richtung Rampe (1), Riegel (35) hebt sich aus der Zahnstange (7). Die Befestigung (9) schiebt über den Verbindungsarm die Stützplatte (11) über Führung (23) in X-Richtung (Richtung Rampe (1)). Die Stützplatte (11) schiebt erst Stützplatte (12) Richtung Rampe (1), bis diese wieder in Ruhestellung auf Führung (23) zu liegen kommt und schiebt sich dann über Stützplatte (12) auch in Ruhestellung. Diese ist erreicht, wenn der Antrieb (16) ganz zurückgenommen ist bzw. im Falle eines Zylinders ganz eingefahren ist.
Dadurch, daß Haken (4) nicht mehr unterstützt ist, fällt er selbst durch Eigengewicht um Achse (5) drehend in die horizontale Stellung. Das Spannelement (18) zieht den Haken (4) über das Zugkabel (8) in Ruhestellung, so daß wieder die Ausgangssituation gemäß Fig. 2 entsteht.

Die erfindungsgemäße Vorrichtung kann auch in den Boden (2) vor der Rampe (1) abgesenkt eingebaut werden und statt des Unterfahrschutzes (37) z.B. die Räder des Fahrzeugs blockieren. Dies ist durch Anpassung des Antriebs (16) möglich, der dann bevorzugt ein Kettenantrieb oder dergleichen sein kann.

Der Haken (4) kann aus einem mechanisch beständigen Material wie z.B. Kunststoff oder ein Stahlträger sein.

Der Vorteil der erfindungsgemäßen Vorrichtung liegt darin, daß auch Fahrzeuge mit Ladebordwänden arretiert werden können, und durch besondere Ausgestaltungen optimale Sicherheit hinsichtlich der zeitlichen Abfolge des Ladevorangs gegeben ist. Weiterhin sind hierfür keine komplizierten, teuren Baumaßnahmen erforderlich.

Die Vorrichtung kann zum Festhalten am Unterfahrschutz oder ähnlichen Befestigungsmitteln an Fahrzeugen angewandt oder auch zum Blockieren von Rädern benutzt werden, falls kein anderes Befestigungsmittel vorhanden ist.

## Patentansprüche

1. Vorrichtung zum Festhalten eines Fahrzeugs an einer Laderampe, umfassend ein Gehäuse (3), einen Haken (4), eine Antriebsvorrichtung (16) sowie eine Verriegelungsvorrichtung hierfür, wobei
1.1 der im Gehäuse (3) angeordnete Haken (4) mit einer Achse (5) zwischen obersten und mittleren Wangen (20,21) vertikal drehbar gelagert und in vertikaler Position über den horizontalen Verstellbereich (a) in Richtung Rampe (1) und von dieser weg verschiebbar ist, wobei die Achse (5) weiterhin in einem Rohr (6) drehbar gelagert ist, welchem in Richtung Rampe (1) mit einem Zugkabel (8) und in Richtung Abdeckplatte (13) der Verriegelung (16), d.h. in Richtung von der Rampe weg, mit einer Verriegelungsvorrichtung verbunden ist,
1.2 die Verriegelungsvorrichtung aus einer am Rohr (6) befestigten, horizontal verlaufenden Zahnstange (7), einem etwa senkrecht hierzu angeordneten Arm (33) mit einem damit etwa rechtwinkelig fest verbundenen Riegel (35) mit einer Drehachse (32), sowie einem über eine Schubstange (31) mit dem Arm (33) verbundenen federnd gelagerten Kipphebel (28), der am unteren Ende über ein Federelement (29) mit dem Widerlager (30) des Gehäuses (3) verbunden ist, besteht, wobei die Verbindung zwischen Schubstange (31) und Arm (33) um die Achse (43) einen Spielraum aufweist, und Schubstange (31) und Kipphebel (28) über eine Achse (42) verbunden sind, und
1.3 die linear, in Richtung Rampe und von dieser weg wirkende Antriebsvorrichtung (16) an ihrem der Verriegelung zugewandten, d.h. von der Rampe wegweisenden Ende über eine Befestigung (9) mit einem parallel zu ihr angeordneten Verbindungsarm (10) verbunden ist, welcher an seinem rampenseitigen Ende mit horizontal zwischen den mittleren Wangen (21) und untersten Wangen (22) bewegbarer oberer Stützplatte (11) fest verbunden ist, wobei der Antrieb (16) die im Ruhestand über einer unteren Stützplatte (12) liegende obere Stützplatte (11) gegen die X-Richtung, d.h. in Richtung von der Rampe weg, über die untersten Wangen (22) schiebt, wobei die obere Stützplatte (11) Wangen des Hakens (4) berührt und der über Achse (5) zwischen den obersten Wangen (20) und den mittleren Wangen (21) gelagerte Haken (4) ebenfalls gegen X-Richtung, d.h. in Richtung von der Rampe weg, bewegt wird, wobei die Wangen des Hakens (4) über die Abdeckplatte (13) der Verriegelung (16) gleiten und der Haken (4) aufgerichtet wird, während ein Mitnehmer der oberen Stützplatte (11) die untere auf einer Führung (23) auf liegende Stützplatte (12) über eine Schräge der untersten Wangen (22) zieht, bis sie mit der Stützplatte (11) hinter dieser in einer Ebene liegt, und, wenn die Achse (5) des Hakens (4) gegen einen Anschlag (36) zwischen obersten Wangen (20) und mittleren Wangen (21) stößt, die Stützplatte (11) den Haken (4) in vertikale Stellung dreht, während bei Rückführung des Antriebs (16) in Richtung Rampe die obere Stützplatte (11) die untere Stützplatte (12) in X-Richtung, d.h. in Richtung Rampe, bewegt, bis diese auf Führung (23) liegt und die obere Stützplatte (11) sich über die untere Stützplatte 12 schiebt und der Haken (4) in horizontale Stellung dreht,
und
1.4 das Zugkabel (8) oberhalb der Stützplatten (11) und (12) in Richtung Rampe über Umlenkrollen (17) zurück in Richtung Rampe verläuft und über ein Spannelement (18) im Widerlager (19) des Gehäuses (3) befestigt ist.

2. Vorrichtung gemäß Anspruch 1, dadurch gekennzeichnet, daß die Verriegelung in der Schubstange (31) ein Langloch als Spielraum aufweist.

3. Vorrichtung gemäß Anspruch 1 oder 2, dadurch gekennzeichnet, daß der Haken (4) aus Kunststoff oder ein Stahlträger ist.

4. Vorrichtug gemäß einem der Ansprüche 1 bis 3, dadurch gekennzeichnet, daß die Antriebsvorrichtung (16) ein elektro-hydraulisch, ein elektrisch oder ein pneumatisch betätigter Zylinder oder ein Kettenantrieb ist.

5. Vorrichtung gemäß einem der Ansprüche 1 bis 4, dadurch gekennzeichnet, daß das Gehäuse (3) rechteckig oder trapezförmig ist.

6. Vorrichtung gemäß einem der Ansprüche 1 bis 5, dadurch gekennzeichnet, daß das Gehäuse (3) mit Befestigungen (24) im Boden verankert ist.

7. Vorrichtung gemäß einem der Ansprüche 1 bis 6, dadurch gekennzeichnet, daß der Riegel (35) zusätzlich ein Federelement (34) geringer Federkraft aufweist.

8. Vorrichtung gemäß einem der Ansprüche 1 bis 7, dadurch gekennzeichnet, daß das Spannelement (18) eine Feder mit linearer Kraftverteilung ist.

9. Vorrichtung gemäß einem der Ansprüche 1-8, dadurch gekennzeichnet, daß sie zusätzlich eine Schaltung mit optischen Lichtzeichen aufweist.

10. Vorrichtung gemäß einem der Ansprüche 1-9, dadurch gekennzeichnet, daß die Höhe (y) des Gehäuses (3) maximal 200 mm beträgt.

11. Vorrichtung gemäß einem der Ansprüche 1-10, dadurch gekennzeichnet, daß das Gehäuse (3) aus Stahl ist.

12. Vorrichtung gemäß einem der Ansprüche 1-11, dadurch gekennzeichnet, daß die Schaltung der Ampeln über in Gehäuse (3) eingebaute Endschalter bzw. Näherungsschalter erfolgt.

13. Vorrichtung gemäß einem der Ansprüche 1-12, dadurch gekennzeichnet, daß der Schaltkasten zur Steuerung drei grundlegende Bedienungsschalter aufweist, und zwar "Verriegeln", "Entriegeln" und "Bypass für ungesichertes Laden", alle weiteren Schaltungen und Bewegungen automatisch ablaufen.

## Claims

1. Device for retaining a vehicle at a loading ramp, comprising a housing (3), a hook (4), a drive device (16) as well as an interlocking device for said purpose, wherein
1.1 the hook (4) disposed in the housing (3) is supported by an axis (5) between topmost and middle bearers (20, 21) so as to be vertically rotatable and in a vertical position is displaceable over the horizontal range of adjustment (a) towards and away from the ramp (1), the axis (5) further being rotatably supported in a tube (6) which in the direction of the ramp (1) is connected to a tension cable (8) and in the direction of the cover plate (13) of the interlock (16), i.e. in the direction away from the ramp, is connected to an interlocking device,
1.2 the interlocking device comprises a horizontally extending gear rack (7) fastened to the tube (6), an arm (33) disposed substantially perpendicular to said gear rack and having a locking bar (35) which is rigidly connected at right angles thereto and has an axis of rotation (32), as well as a spring-mounted rocking lever (28) which is connected via a push rod (31) to the arm (33) and whose bottom end is connected via a spring element (29) to the abutment (30) of the housing (3), the connection between push rod (31) and arm (33) having play around the axis (43), and push rod (31) and rocking lever (28) being connected via an axis (42) and
1.3 the drive device (16) operating linearly towards and away from the ramp is connected at its end facing the interlock, i.e. remote from the ramp, via a fixture (9) to a connection arm (10), which is disposed parallel to the drive device and at its ramp-side end is rigidly connected to a top support plate (11) which is movable horizontally between the middle bearers (21) and bottommost bearers (22), the drive (16) pushing the top support plate (11), which in the position of rest lies above a bottom support plate (12), counter to direction X, i.e. away from the ramp, over the bottommost bearers (22), the top support plate (11) touching the bearers of the hook (4) and the hook (4) supported via axis (5) between the topmost bearers (20) and the middle bearers (21) likewise being moved counter to direction X, i.e. away from the ramp, the bearers of the hook (4) sliding over the cover plate (13) of the interlock (16) and the hook (4) being raised, while a driver of the top support plate (11) pulls the bottom support plate (12), which lies on a guide (23), over a bevel of the bottommost bearers (22) until it lies behind and level with the support plate (11), and when the axis (5) of the hook (4) strikes against a stop (36) between the topmost bearers (20) and the middle bearers (21), the support plate (11) rotates the hook (4) into a vertical position while, on resetting of the drive (16) towards the ramp, the top support plate (11) moves the bottom support plate (12) in direction X, i.e. towards the ramp, until it lies on guide (23) and the top support plate (11) slides over the bottom support plate 12 and the hook (4) rotates into a horizontal position, and
1.4 the tension cable (8) extends above the support plates (11) and (12) towards the ramp, via guide pulleys (17) and back towards the ramp and is fastened via a tensioning element (18) in the abutment (19) of the housing (3).

2. Device according to claim 1, characterized in that the interlock in the push rod (31) has an oblong hole as play.

3. Device according to claim 1 or 2, characterized in that the hook (4) is made of plastic or is a steel girder.

4. Device according to one of claims 1 to 3, characterized in that the drive device (16) is an electro-hydraulically, electrically or pneumatically operated cylinder or a chain drive.

5. Device according to one of claims 1 to 4, characterized in that the housing (3) is rectangular or trapezoidal.

6. Device according to one of claims 1 to 5, characterized in that the housing (3) is anchored by fixtures (24) in the ground.

7. Device according to one of claims 1 to 6, characterized in that the locking bar (35) additionally has a spring element (34) of low spring power.

8. Device according to one of claims 1 to 7, characterized in that the tensioning element (18) is a spring with linear power distribution.

9. Device according to one of claims 1 to 8, characterized in that the device additionally has a circuit with visual light signals.

10. Device according to one of claims 1 to 9, characterized in that the height (y) of the housing (3) is at most 200 mm.

11. Device according to one of claims 1 to 10, characterized in that the housing (3) is made of steel.

12. Device according to one of claims 1 to 11, characterized in that operation of the traffic lights is effected via end switches or proximity switches installed in the housing (3).

13. Device according to one of claims 1 to 12, characterized in that, for control purposes, the control box has three basic control switches, namely "lock", "release" and "bypass for unretained loading", with all other switching operations and movements running off automatically.

## Revendications

1. Dispositif pour retenir un véhicule contre un quai de chargement, comportant une boîte (3), un crochet (4), un dispositif d'entraînement (16) ainsi que pour celui-ci, un dispositif de verrouillage, dispositif dans le cas duquel:
1.1. le crochet (4) disposé dans la boîte (3) est porté par un axe (5) entre les coulisses supérieures et médianes (20, 21) avec liberté de tourner pour venir en position verticale et, en position verticale, peut coulisser, sur la plage de déplacement horizontal (a), en allant en direction du quai (1) et en s'en écartant, étant précisé qu'en outre l'axe (5) porte, avec liberté de pivotement, dans un tube (6) qui est relié, en direction du quai (1), avec un câble de traction (8) et, en direction de la plaque de recouvrement (13) du verrouillage (16), c'est-à-dire en direction opposée au quai, avec un dispositif de verrouillage.
1.2. le dispositif de verrouillage est constitué d'une crémaillère (7) qui est fixée au tube (6) et qui est orientée horizontalement, d'un bras (33) qui lui est disposé à peu près perpendiculairement et présente un verrou (35), d'axe de rotation (32), qui lui est solidarisé à peu près perpendiculairement, ainsi que d'un levier culbuteur (28) qui est relié, par l'intermédiaire d'une bielle (31), avec le bras (33), qui est contraint par un ressort et qui, à son extrémité inférieure, est relié, par l'intermédiaire d'un élément élastique (29), avec la butée (30) de la boîte (3), étant précisé que la liaison, autour de l'axe (43) entre la bielle (31) et le bras (33) présente un jeu et que la bielle (31) et le levier culbuteur (28) sont reliés par l'intermédiaire d'un axe (42), et
1.3. le dispositif d'entraînement linéaire (16), qui agit en direction de la rampe et en direction opposée à celle-ci, est relié, à son extrémité orientée vers le verrouillage, c'est-à-dire orientée en sens opposé au quai, par l'intermédiaire d'une fixation (9), avec un bras de liaison (10) qui est disposé parallèlement à cette fixation et qui, à son extrémité située du côté du quai, est solidarisé avec une plaque d'appui supérieure (11) qui peut se déplacer horizontalement entre les coulisses médianes (21) et les coulisses inférieures (22), étant précisé que le mécanisme d'entraînement (16) fait coulisser la plaque d'appui supérieure (11), qui, en position de repos, se trouve au-dessus d'une plaque d'appui inférieure (12), en direction opposée à la direction X, c'est-à-dire dans la direction qui l'éloigne du quai, sur les coulisses inférieures, étant précisé que la plaque d'appui supérieure (11) vient en contact avec les joues du crochet (4) et que le crochet, porté, par l'intermédiaire de l'axe (5), entre les coulisses supérieures (20) et les coulisses médianes (21), se déplace également en direction opposée à la direction X, c'est-à-dire dans la direction qui l'éloigne du quai, étant précisé que les joues du crochet (4) glissent le long de la plaque de recouvrement (13) du verrouillage (16) et que le crochet (4) se dresse, pendant qu'un entraîneur de la plaque d'appui supérieure (11) tire la plaque d'appui inférieure (12), qui repose sur un guidage (23), le long d'un plan oblique des coulisses inférieures (22) jusqu'à ce qu'elle se trouve dans le même plan que la plaque d'appui (11) et derrière celle-ci, et que, lorsque l'axe (5) du crochet (4) bute contre une butée (36) située entre les coulisses supérieures (20) et les coulisses médianes (21), la plaque d'appui (11) fait tourner le crochet (4) pour l'amener en position verticale, tandis que, lors de la rétraction du mécanisme d'entraînement (16) en direction du quai, la plaque d'appui supérieure (11) entraîne la plaque d'appui inférieure (12) selon la direction X, c'est-à-dire en direction du quai, jusqu'à ce que celle-ci repose sur le guidage (23) et la plaque d'appui supérieure (11) se place, en coulissant, au-dessus de la plaque d'appui inférieure (12) et le crochet (4) tourne pour revenir en position horizontale, et
1.4 le câble de traction (8), en passant au-dessus des plaques d'appui (11 et 12) en direction du quai revient vers le quai en passant sur des rouleaux de changement de direction (17) et il est fixé dans la butée (19) de la boîte (3) par l'intermédiaire d'un élément de tension (18).

2. Dispositif selon la revendication 1, caractérisé par le fait que le verrouillage dans la bielle (31) présente comme jeu une lumière longitudinale.

3. Dispositif selon la revendication 1 ou 2, caractérisé par le fait que le crochet (4) est en plastique ou bien qu'il est une poutrelle d'acier.

4. Dispositif selon l'une des revendications 1 à 3, caractérisé par le fait que le dispositif d'entraînement (16) est un vérin à manoeuvre électro-hydraulique, électrique ou pneumatique ou bien qu'il est un mécanisme d'entraînement à chaîne.

5. Dispositif selon l'une des revendications 1 à 4, caractérisé par le fait que la boîte (3) est de forme rectangulaire ou trapézoïdale.

6. Dispositif selon l'une des revendications 1 à 5, caractérisé par le fait que la boîte (3) est ancrée dans le sol par des attaches (24).

7. Dispositif selon l'une des revendications 1 à 6, caractérisé par le fait que le verrou (35) présente en outre un élément élastique (34) de moindre force élastique.

8. Dispositif selon l'une des revendications 1 à 7, caractérisé par le fait que l'élément de tension (8) est un ressort à distribution linéaire de la force.

9. Dispositif selon l'une des revendications 1-8, caractérisé par le fait qu'il présente en outre un circuit avec des repères optiques.

10. Dispositif selon l'une des revendications 1-9, caractérisé par le fait que la hauteur (y) de la boîte (3) est au maximum de 200 mm.

11. Dispositif selon l'une des revendications 1-10, caractérisé par le fait que la boîte (3) est en acier.

12. Dispositif selon l'une des revendications 1-11, caractérisé par le fait que la mise en circuit des feux se fait par l'intermédiaire de commutateurs de fin de course ou de commutateurs de proximité incorporés dans la boîte (3).

13. Dispositif selon l'une des revendications 1-12, caractérisé par le fait que le pupitre de commande présente 3 commutateurs de manoeuvre de base et, de façon plus précise, "verrouillage", "déverrouillage" et "bypass pour chargement sans sécurité", tous les autres circuits et mouvements se déroulant automatiquement.
